(19) Europäisches Patentamt
European Patent Office
Office européen des brevets

(11) **EP 4 184 270 A1**

(12) **EUROPEAN PATENT APPLICATION**

(43) Date of publication:
**24.05.2023 Bulletin 2023/21**

(21) Application number: **21210072.1**

(22) Date of filing: **23.11.2021**

(51) International Patent Classification (IPC):
**G05B 23/02** *(2006.01)*

(52) Cooperative Patent Classification (CPC):
**G05B 23/024**; B60L 2260/54

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VOLVO TRUCK CORPORATION
405 08 Göteborg (SE)**

(72) Inventors:
• **LOMBARD, Benoit
38200 Villette-de-Vienne (FR)**
• **ESTRAGNAT, Emmaneul
69003 SAINTE FOY LES LYON (FR)**
• **LUNDSTRÖM, Jens
302 79 HOLM (SE)**

• **QUELIN, Jerome
69100 Villeurbanne (FR)**
• **STAHL, Adam
433 60 Sävedalen (SE)**
• **ODEBO LÄNK, Nils
414 66 Göteborg (SE)**
• **FRUCHARD, Nicolas
69003 Lyon (FR)**
• **BERNASCONI, Regis
405 08 Göteborg (SE)**
• **LUCHINI, Fabrice
405 08 Götebort (SE)**
• **RODRIGUES, Gilbert
69800 Saint-Priest (FR)**

(74) Representative: **Valea AB
Box 1098
405 23 Göteborg (SE)**

(54) **A DEVICE AND METHOD FOR HANDLING A DATA ASSOCIATED WITH ENERGY CONSUMPTION OF A VEHICLE**

(57)    The present invention relates to a method performed by a device (101) for handling data associated with energy consumption of a vehicle (100) in operation. The device (101) obtains modelling data associated with energy consumption of a model vehicle. The modelling data are generated by a digital model of the vehicle (100) in operation. The device (101) obtains operating data associated with energy consumption of the vehicle (100) in operation. The device (101) compares the operating data to the modelling data. Based on a result of the comparing, the device (101) detects a discrepancy between the operating data and the modelling data and associated with the energy consumption. The device (101) evaluates the detected discrepancy associated with the energy consumption. The device (101) triggers an operation when the discrepancy has been detected.

Fig. 1

## Description

TECHNICAL FIELD

The present disclosure relates generally to a device and a method performed by the device. More particularly, the present disclosure relates to for handling data associated with energy consumption of a vehicle in operation.

The invention may be applied in at least partly electrical heavy-duty vehicles, such as trucks, buses and construction equipment etc. Although the invention will be described with respect to a fully electrified truck, the invention is not restricted to this particular vehicle, but may also be used in other vehicles such as buses, trailers, wheel loaders, articulated haulers, excavators, backhoe loaders, passenger cars, marine vessels etc. It may also be applied in electrical systems of e.g. electrically operated vessels and in various industrial construction machines or working machines. It is applicable in fully electrically operated vehicles as well as in hybrid vehicles, comprising also a combustion engine.

The invention may be applied in partly autonomous vehicle, a fully autonomous vehicle or in a non-autonomous vehicle.

BACKGROUND

The cost of energy is one of the highest cost centres for vehicle users. Monitoring fuel consumption is key for them and is now possible thanks to the connected trucks that allows to retrieve operational data on a regular basis (daily to minute). In regard of the volume of generated data, the number of factors influencing the energy consumption, e.g. mission, user behavior, vehicle configuration, trailers, tyres, etc., makes it very complex and time consuming to detect discrepancies and understand the root cause of the energy deviation.

Therefore, there is a need to at least mitigate or solve this issue.

SUMMARY

An object of the invention is to improve handling of energy consumption of a vehicle.

According to a first aspect, the object is achieved by a method according to claim 1. The method is performed by a device and is for handling data associated with energy consumption of a vehicle in operation. The device obtains modelling data associated with energy consumption of a model vehicle. The modelling data are generated by a digital model of the vehicle in operation. The device obtains operating data associated with energy consumption of the vehicle in operation. The device compares the operating data to the modelling data. Based on a result of the comparing, the device detects a discrepancy between the operating data and the modelling data and associated with the energy consumption.

The device evaluates the detected discrepancy associated with the energy consumption and triggers an operation when the discrepancy has been detected. By the provision of the method, handling of energy consumption of a vehicle is improved.

According to one embodiment, the step of evaluating the detected discrepancy associated with the energy consumption comprises one or more of:

- evaluating energy consumption of the vehicle in operation;
- detecting malfunction of the vehicle in operation;
- determining a reason for the discrepancy;
- determining a vehicle configuration change; and
- determining a vehicle operation change.

An advantage of this embodiment may that the evaluation of the detected discrepancy is wide and provides multiple possibilities.

According to a further embodiment, the operation comprises one or more of:

- providing information associated with the discrepancy;
- triggering an alert;
- initiating scheduling of a service operation; and
- requesting input from a user of the vehicle in operation.

An advantage of this embodiment may be that the possibility to handle the energy consumption of the vehicle is improved. The operation may be a variety of different operations which makes it possible to tailor the operation to a specific application, to a user requirement etc. With the operation, the discrepancy in energy consumption may be easy to discover by an operator or user.

According to another embodiment, the modelling data and the operating data may be both based on static data and/or dynamic data. An advantage of this may be that the basis for the modelling data and the operating data may be based on a type of data that is suitable for the method, data that provides an accurate and high-quality basis for the evaluation of the detected discrepancy.

According to a further embodiment, the device may obtain a statistical distribution of the modelling data. The device may compare the operating data to the modelling data by comparing operating data to the statistical distribution of the modelling data to determine if the operating data is according to the statistical distribution or not. Hereby an improvement in that the comparing is made with increased accuracy.

According to another embodiment, the step of evaluating the detected discrepancy associated with the energy consumption may comprise that the device determines a user anticipation score for a user of the vehicle in operation. The user anticipation score may be:
user anticipation score ~

$$f\left(\frac{w\_overall}{W^{\varepsilon} * B^{\delta} * S^{\zeta}}\right)$$

, where

- W: weight impact ~ $\alpha * w_{light} + \beta * W_{medium} + \gamma * w_{full}$
- B: brake impact ~

$$\max\left(\frac{brakes - stops}{stops}, \; brake\_max\right)$$

- S: speed impact ~ $\dfrac{v - v_{min}}{v_{max} - v_{min}}$
- $\alpha, \beta, y, \delta, \varepsilon, \zeta, w_{overall}, brake\_max$ : real value scalar parameters
- $w\_overall$: overall weight
- $brake\_max$: max limit for a brake impact
- $f$: a normalized sigmoid function that maps any real value to a value between 0 and 1
- $w_{light}, w_{medium}, w_{full}$: a ratio of km driven with light, medium and full weight load respectively
- $v$: an average speed and speeds outside $v_{min}$ or $v_{max}$ will be clipped to those values.

An advantage of the user anticipation score may be that the user anticipation score may be linked to a specific action to be performed, a target to be reach and a potential gain in energy reduction if the target is reached.

According to another embodiment, the step of evaluating the detected discrepancy associated with the energy consumption may comprise that the device determines a user eco score for a user of the vehicle in operation. The user eco score may be:

eco score ~ $f\left(\dfrac{w_{overall} * W^{\eta}}{O^{\theta} * N^{\kappa} * S^{\mu}}\right)$ , where

- W: weight impact ~ $\alpha * w_{light} + \beta * W_{medium} + \gamma * w_{full}$
- O: overload impact ~ $\dfrac{1}{\varphi} * \dfrac{t\_overload}{t\_total}$
- N: not in green zone impact ~

$$\frac{1}{\xi} * \left(\max\left(\min\left(\frac{l_{notgreen} - l_{avg}}{l_{avg}}, \; 0\right), 1\right)\right)$$

- S: speed impact ~ $\dfrac{v - v_{min}}{v_{max} - v_{min}}$
- $\eta, \theta, \kappa, \mu, \varphi$: real value scalar parameters
- $w_{overall}$: an overall weight
- $\varphi, \xi$: normalization factors
- $f$: a normalized sigmoid function that maps any real value to a value between 0 and 1
- $w_{light}, w_{medium}, w_{full}$: a ratio of km driven with light, medium and full weight load respectively
- $\dfrac{t\_overload}{t\_total}$ : a ratio of time spent in overload
- $l\_notgreen$: liters per 100 km spent above the green zone
- $l_{avg}$: liters per 100 km
- $v$: an average speed and speeds outside $v_{min}$ or $v_{max}$ will be clipped to those values.

An advantage of the user eco score may be that the user eco score may be linked to a specific action to be performed, a target to be reach and a potential gain in energy reduction if the target is reached.

According to a further embodiment, the digital model of the vehicle in operation may be implemented on a remote server or in the vehicle. An advantage of implementing the digital model on a remote server may be that it may be easy to make changes, corrections to the digital model and that this may not affect the operation of the vehicle. An advantage of implementing the digital model in the vehicle may be that the transmission path for data between the vehicle and the digital model may be short which reduces the risk for data loss and transmission delay.

According to another embodiment, the digital model may be configured based on historic operating data obtained from a fleet of vehicles. An advantage of using historic operating data is that the evaluation may be that the accuracy of the digital model may be improved.

According to a further embodiment, vehicles comprised in the fleet of vehicles may have similar mission and configuration. An advantage of this may be that the accuracy of the digital may be improved. Data from vehicles having different mission and configuration may not be used for the digital model, which may affect the digital model negatively.

According to another embodiment, the vehicles comprised in the fleet of vehicles may be selected from a main fleet of vehicles comprising vehicles having both similar and different mission and configuration. The selection of fleets of vehicles with both similar and different mission and configuration may be larger than of a fleet of vehicles with only similar mission and configuration. Thus, it may be easier to find a fleet of vehicle that can be used for the digital model.

According to a second aspect of the invention, the object is achieved by a device according to claim 12. The device for handling a data associated with energy consumption of vehicles is configured to perform the steps of the method according to the first aspect. The device is configured to perform the steps of the method described in the first aspect. The device may be an electronic device comprising processing circuitry for performing the method. The device may be a computer. The central unit may comprise hardware or hardware and software. Advantages and effects of the device are largely analogous to the advantages and effects of the method. Further, all embodiments of the method are applicable to and combinable with all embodiments of the device, and vice versa.

According to a second aspect of the invention, the object is achieved by vehicle according to claim 13. The vehicle comprises a device according to the second aspect. Advantages and effects of the vehicle are largely analogous to the advantages and effects of the method. Further, all embodiments of the method are applicable to and combinable with all embodiments of the vehicle, and vice versa.

According to a second aspect of the invention, the object is achieved by a computer program according to claim 14. The computer program comprises program code means for performing the steps of the method of the first aspect when the computer program is run on a computer. Advantages and effects of the computer program are largely analogous to the advantages and effects of the method. Further, all embodiments of the method are applicable to and combinable with all embodiments of the computer program, and vice versa.

According to a second aspect of the invention, the object is achieved by a computer readable medium according to claim 15. The computer readable medium carries aa computer program comprising program code means for performing the steps of the method of the first aspect when the computer program is run on a computer. Advantages and effects of the computer readable medium are largely analogous to the advantages and effects of the method. Further, all embodiments of the method are applicable to and combinable with all embodiments of the computer readable medium, and vice versa.

The present invention is not limited to the features and advantages mentioned above. A person skilled in the art will recognize additional features and advantages upon reading the following detailed description.

BRIEF DESCRIPTION OF THE DRAWINGS

With reference to the appended drawings, below follows a more detailed description of embodiments of the invention cited as examples.

In the drawings:

| | |
|---|---|
| Fig. 1 | is a schematic drawing illustrating a vehicle. |
| Fig. 2 | is a flow chart illustrating a method. |
| Fig. 3 | is a flow chart illustrating a method. |
| Fig. 4 | is a flow chart illustrating a method. |
| Fig. 5 | is a flow chart illustrating a method. |
| Fig. 6 | is a schematic drawing illustrating a device. |
| Fig. 7 | is a schematic drawing illustrating a digital model. |
| Fig. 8 | is a graph illustrating a statistical analysis. |
| Fig. 9 | is a graph illustrating a discrepancy and a trust area. |
| Fig.10 | are graphs used in root cause investigation. |
| Fig.11a and 11b | is a schematic drawing illustrating a method. |

The drawings are not necessarily to scale, and the dimensions of certain features may have been exaggerated for the sake of clarity. Emphasis is instead placed upon illustrating the principle.

DETAILED DESCRIPTION OF EXAMPLE EMBODIMENTS OF THE INVENTION

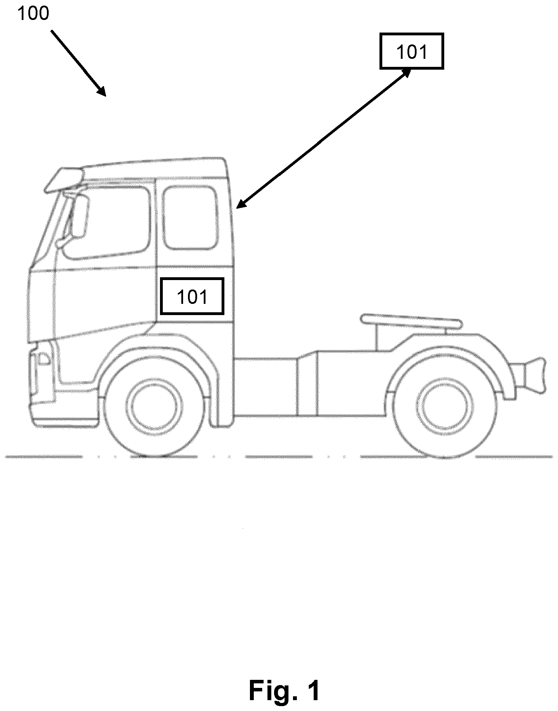

**Fig. 1** illustrates a vehicle 100. The vehicle 100 may be an at least partly electrical heavy-duty vehicles, such as truck, bus, construction equipment, trailer, wheel loader, excavator, passenger car, marine vessel, working machine etc. The vehicle 100 may be a fully electrically operated vehicle as well as a hybrid vehicle, comprising also a combustion engine, and a vehicle only comprising a combustion engine. The vehicle 100 may be a fully autonomous vehicle, an at least partly autonomous vehicle or a non-autonomous vehicle.

Directions as used herein, e.g. horizontal, vertical, lateral, relate to when the vehicle 100 is standing on flat ground. For convenience, the vehicle 100 as shown in fig.1 is defined herein with respect to a Cartesian coordinate system, wherein a longitudinal extension of the vehicle 100 extends along an x-axis, a transverse extension the vehicle 100 extends along a y-axis and a height extension of the vehicle 100 extends along a z-axis of the Cartesian coordinate system. It shall however be noted that directions, locations, orientations etc. may be expressed in any other type of coordinate system.

The vehicle 100 may be a vehicle in operation. It may be in operation in that the engine is running and the vehicle is running or standing still.

The vehicle 100 may be used by a user. The user may be a driver, an operator etc. of the vehicle 100. For example, if the vehicle 100 is an at least partly autonomous vehicle, then it may be operated or driven by a user. In another example, if the vehicle 100 is manually operated, i.e. non-autonomous vehicle, then the vehicle 100 may be operated or driven by a driver. The user of the vehicle 100 may be located inside the vehicle 100 when operating it, or he/she may be remotely located from the vehicle 100.

The vehicle 100 may be comprised in a vehicle fleet or fleet of vehicles. In other words, the vehicle 100 may be comprised in a group of vehicles, comprising a plurality of vehicles.

A **device 101** is illustrated in fig. 1. The device 101 may be comprised in the vehicle 100 or it may be a remote server or comprised in a remote server. A part of the device 101 may be comprised in the vehicle 100 and another part of the vehicle device 101 may be comprised in a remote server. These two alternative locations of the device 101 are illustrated with the boxes with reference number 101 in fig. 1. A remote server may be referred to as an offboard device. If the device 101 is comprised in the vehicle 100 it may be located at any suitable location in the vehicle 100. If the device 101 is a remote server or comprised in a remote server, then the device 101 is adapted to be connected to the vehicle 100 via a communication link, e.g. wired or wirelessly. The remote server may be located at any suitable distance from the vehicle 100. For example, the remote server may be in close proximity to the vehicle 100, it may be a cloud server etc. The device 101 may be an electronic control unit comprising processing circuitry for performing the method described herein. The device 101 may be a computer. The device 101 may comprise hardware or hardware and software. The device 101 may comprise a processor, memory, transmitter, receiver etc. The device 101 may comprise a digital model of the vehicle in operation, or it may be adapted to obtain data generated from the digital model of the vehicle 100 in operation. The device 101 will be described in more detail later.

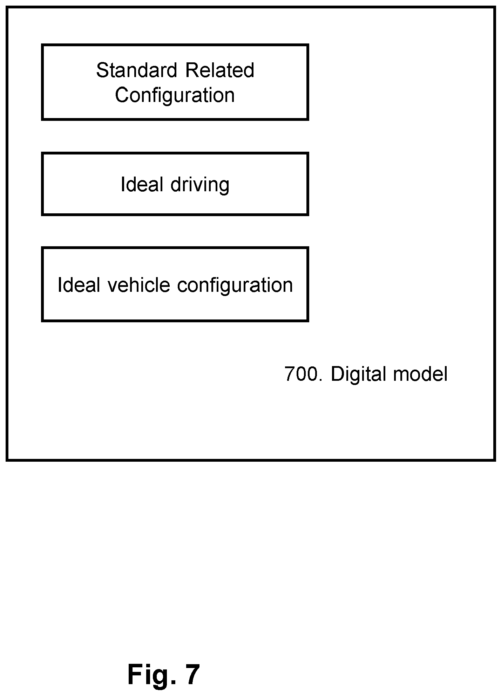

Before describing the method for handling data associated with energy consumption of a vehicle 100 in operation, the term digital model will be described in more detail. A digital model may be referred to as a digital twin. A digital twin may be a digital representation of a physical or real object or process. In the context of the present invention, the digital twin may be a digital representation of the vehicle 100 in operation. The digital twin may be configured based on historic data from a vehicle fleet. The digital twin may represent an ideal vehicle for example in terms of fuel consumption, driving behavior etc. The digital twin may be implemented in the device 101, or the device 101 may be adapted to obtain data from another device on which the digital twin is implemented, e.g. a cloud device, a central device etc. More detailer regarding the digital model is provided later when fig. 7 is described.

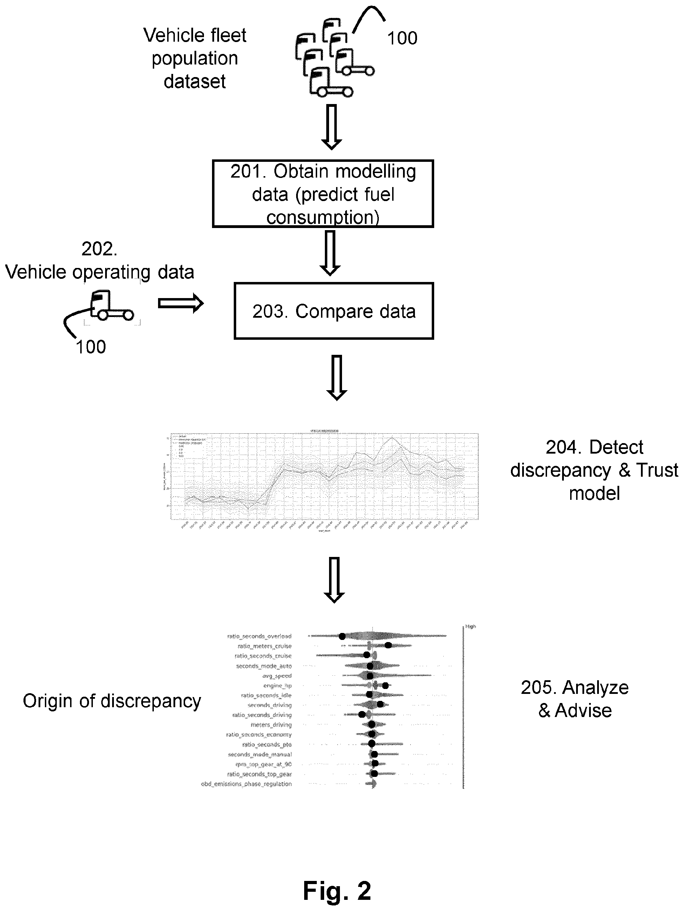

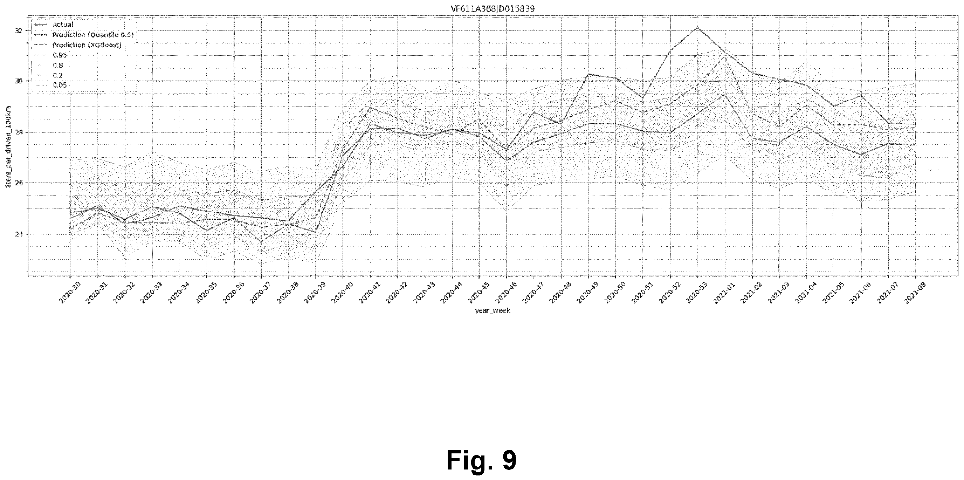

**Fig. 2** is a flow chart illustrating a method performed by the device 101 for handling data associated with energy consumption of a vehicle 100 in operation. Before the method is performed, it is assumed that the device 101 has access to a dataset from a vehicle fleet. The dataset may be a historic data set comprising data for a vehicle fleet previously obtained. The fleet of vehicles may be described as a plurality of vehicles. In fig. 2, the vehicles comprised in the vehicle fleet, may have the same mission and configuration. An example of the configuration may be aerodynamics and tires, engine and powertrain etc. In step **201,** the device 101 obtains modeling data associated with energy consumption of a model vehicle. The model vehicle may be described as an ideal vehicle, i.e. an model or ideal representation of the vehicle 100 in operation. The modelling data are generated by the digital model of the vehicle 100 in operation. The modeling data may be described as a prediction of fuel consumption of the model vehicle. In step **202,** the device 101 obtains operating data from the vehicle in operation. The operating data may be real data obtained during operation of the vehicle 100. In step **203,** the device 101 compares the modeling data and the operating data. For example, the device 101 compares the predicted fuel consumption of the model vehicle with the real fuel consumption of the vehicle 100 in operation. In step **204,** the device 101 detects a discrepancy between the modelling data and the operating data, if present. The device 101 may also generate a trust model. The trust model will be described in more detail with reference to fig. 9. In step **205,** the device evaluates and analyses the detected discrepancy. An output of step 205 may be an advise related to how to reduce or overcome the discrepancy, it may be information indicating an origin of the discrepancy etc.

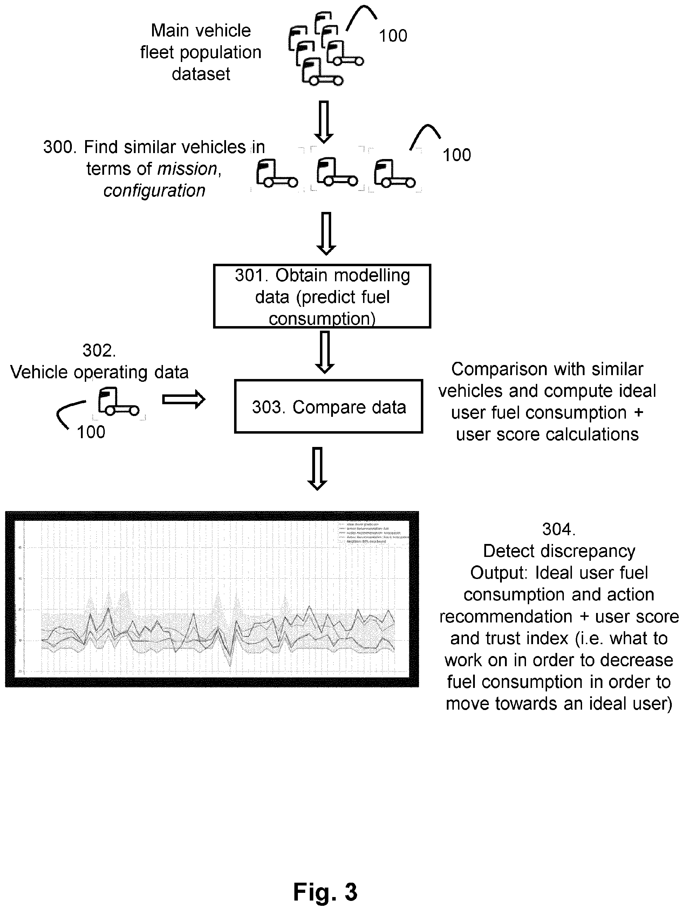

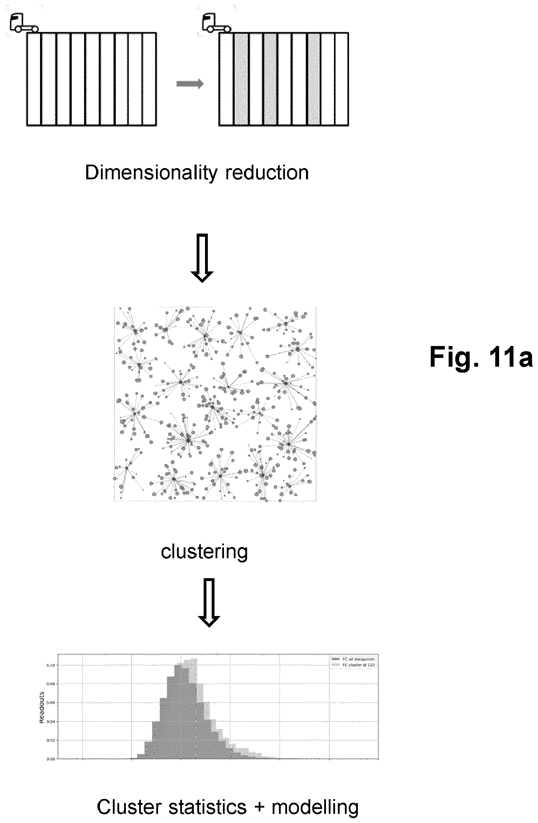

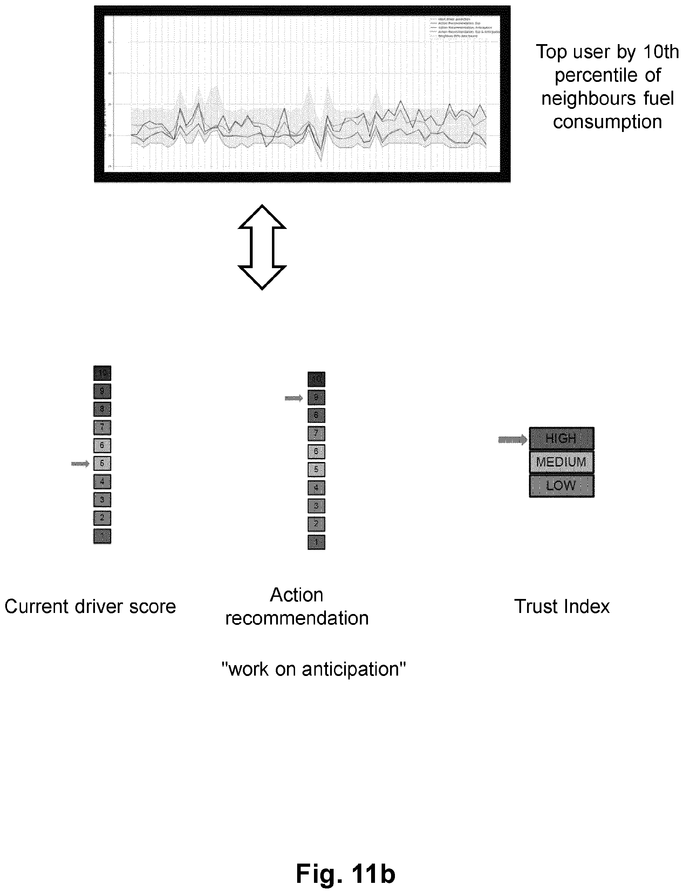

**Fig. 3** is a flow chart illustrating a method performed by the device 101 for handling data associated with energy consumption of a vehicle 100 in operation. Before the method is performed, it is assumed that the device 101 has access to a dataset from a main vehicle fleet or a first vehicle fleet. The dataset may be a historic data set comprising data for a vehicle fleet previously obtained. The vehicles comprised in the main vehicle fleet may have both similar and different mission and configuration. An example of the configuration may be aerodynamics and tires, engine and powertrain etc. In step **300,** the device 101 finds vehicles that are similar in terms of mission and configuration in the main vehicle fleet. Thus, the device 101 selects the vehicles that are similar in terms of mission and configuration. In step 300, the device 101 selects a sub-set of the main data set, it selects a second dataset from the first data set. After step 300 has been performed, the device 101 has a dataset that is similar to the dataset that is at the start of the method in fig. 2 and that is for vehicles that have the same mission and configuration. In step **301,** the device 101 obtains modeling data associated with energy consumption of a model vehicle. The model vehicle may be described as an ideal vehicle. The model vehicle may be described as an average of the vehicles in the vehicle fleet, possibly optimized. The modelling data are generated by the digital model of the vehicle 100 in operation. The modeling data may be described as a prediction of fuel consumption of the model vehicle. In step **302,** the device 101 obtains operating data from the vehicle in operation. The operating data may be real data obtained during operation of the vehicle 100. In step **303,** the device 101 compares the modeling data and the operating data. For example, the device 101 compares the predicted fuel consumption of the model vehicle with the real fuel consumption of the vehicle 100 in operation. In step 303, the device 101 makes a comparison with similar vehicles, via the digital model. The device 101 may compute the ideal user fuel consumption and user score calculations. In step **304,** the device 101 detects a discrepancy between the modelling data and the operating data, if present. The device 101 may also generate a trust model. An output of step 304 may be the ideal user fuel consumption, an action recommendation, user score and trust index (TI), i.e. what to work on in order to decrease fuel consumption in order to move towards an ideal user. The trust index, determined by the device 101, may be described as a measure which quantifies how much the action recommendation could be trusted and this may be based on the quality of each cluster of vehicles. See also fig. 11a and 11b. The ideal user may be generated using the digital model and based on the historic data of the vehicle fleet. The output of step 304 may be an advise related to how to reduce or overcome the discrepancy, it may be information indicating an origin of the discrepancy etc.

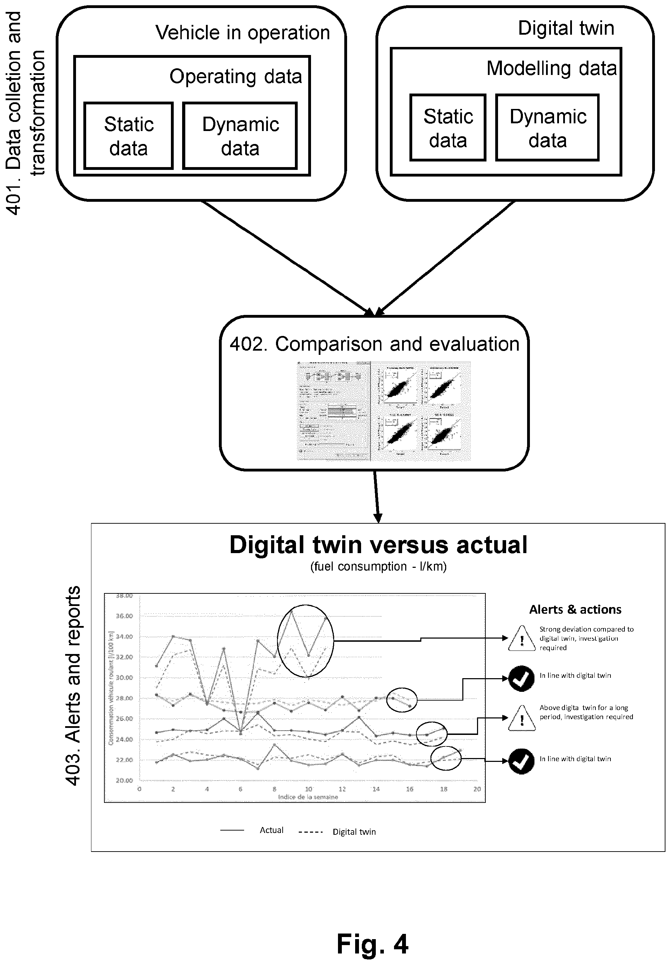

**Fig. 4** is a flow chart illustrating a method performed by the device 101 for handling data associated with energy consumption of a vehicle 100 in operation. In step **401,** the device 101 collects data and may transform the data. The transformation of the data may be to transform the data from one format to another format. The data may be operating data obtained from the vehicle in operation and it may be modelling data obtained from the digital twin. The operating data may comprise at least one of static data and dynamic data. The modelling data may comprise at least one of static data and dynamic data. The static data may be static in that they are not changed during operation of the vehicle 100.

The dynamic data may be dynamic in that they vary during the operation of the vehicle 100. The static data may comprise one or more of:

- Engine Power
- Reduction ration
- Gearbox type
- Aerodynamics options

The dynamic data may comprise one or more of:

- Vehicle Mileage
- User scores: cruise, eco-zone, idle, anticipation
- Average vehicle load
- Estimated topography, e.g. engine load above 90%
- Average driving speed
- Time spent in eco zone
- Time spent in cruise mode
- Time spent in automatic mode
- Time spent gearbox 12
- Braking activation/100km
- Rebuilt average temperature average

In step **402,** the device 101 performs comparison and evaluation of the modeling data and operating data. In step **403,** the device 101 may trigger an operation, e.g. provide alerts and reports. As exemplified in fig. 4, a report may illustrate the digital twin versus the actual vehicle. The solid line in the graph in step 403 represents the actual vehicle and the dotted line represents the digital twin. The graph illustrates an example of the fuel consumption of the digital twin versus the actual fuel consumption of the vehicle 100 in operation. The fuel consumption may be in l/km. Alerts and actions may be indicated, for example on a display accessible by the user or any other operator, which may be for example that there is a strong deviation of the actual vehicle compared to digital twin and that investigation is required. Another example may be that the fuel consumption of the actual vehicle is in line with the digital twin. A further example may be that the fuel consumption of the actual vehicle has been above the digital twin for a long period and that investigation is required.

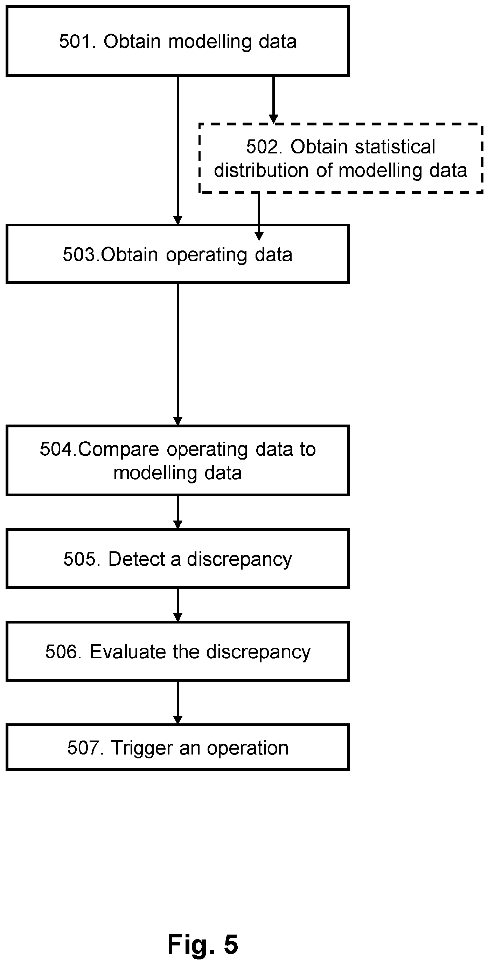

The method described above will now be described seen from the perspective of the device 101. **Fig. 5** is a flowchart describing the method in the device 101 for handling data associated with energy consumption of a vehicle 100 in operation. The method comprises at least one of the following steps to be performed by the device 101, which steps may be performed in any suitable order than described below:

### Step 501

This step corresponds to step 201 in fig. 2, step 301 in fig. 3 and step 401 in fig. 4. The device 101 obtains modelling data associated with energy consumption of a model vehicle. The modelling data are generated by a digital model of the vehicle 100 in operation. The modelling data may be generated based on historic operating data from a fleet of vehicles. The modelling data may comprise a predicted energy consumption for the model vehicle. The model vehicle may be an ideal vehicle, an average vehicle etc.

The digital model may be implemented on a remote server or in the vehicle 100.

The digital model may be configured based on historic operating data obtained from a fleet of vehicles. Vehicles comprised in the fleet of vehicles may have similar mission and configuration. The vehicles comprised in the fleet of vehicles may be selected 300, by the device 101, from a main fleet of vehicles comprising vehicles having both similar and different mission and configuration.

### Step 502

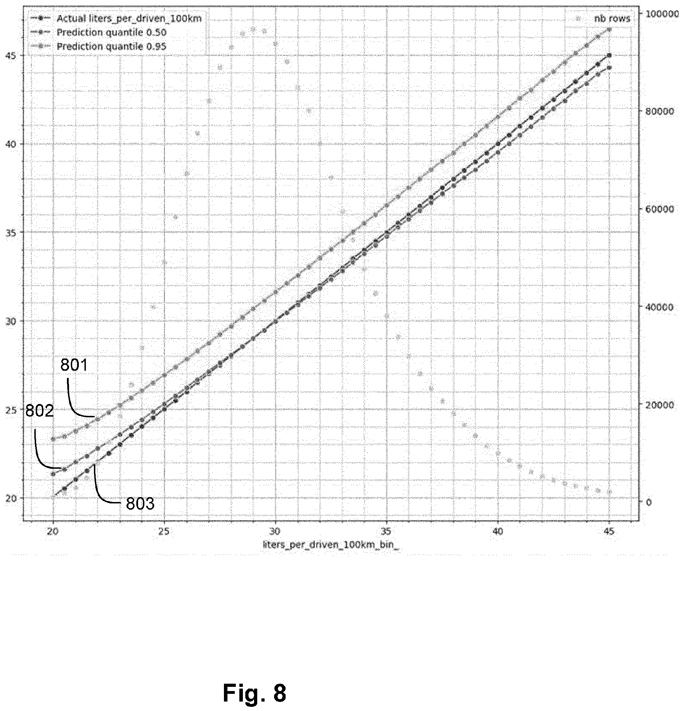

This step corresponds to step 402 in fig. 4. The device 101 may obtain a statistical distribution of the modelling data. For example, the device 101 may obtain an upper prediction and a lower prediction of the fuel consumption. Thus, a confidence interval of the predicted fuel consumption may be provided. See fig. 8 for more details.

### Step 503

This step corresponds to step 201 in fig. 2, step 301 in fig. 3 and step 401 in fig. 4. The device 101 obtains operating data associated with energy consumption of the vehicle 100 in operation. The operating data may be real data, e.g. the real fuel consumption of the vehicle 100 in operation. The operating data may be obtained in real time, e.g. when the vehicle 100 is in operation, it may be obtained upon request from the device 101, it may be provided by the vehicle 101 at regular or irregular time intervals, it may be provided by the vehicle 101 when a certain operation is completed or has lasted for a period of time etc. The operating data may come from the trailers and body of the vehicle 100 in operation.

The modelling data in step 501 and the operating data in step 503 may be both based on static data and/or dynamic data.

Step 504

This step corresponds to step 203 in fig. 2, step 303 in fig. 3 and step 402 in fig. 4. The device 101 compares the operating data to the modelling data. The comparison may provide a result which may indicate that the operating data and the modelling data are substantially the same, e.g. that they are the same with a tolerance, or the result may indicate that the operating data and the modelling data are substantially different, e.g. that there is a discrepancy between them.

Step 504 may comprise that the device 101 compares operating data to the statistical distribution of the modelling data to determine if the operating data is according to the statistical distribution or not.

Step 505

This step corresponds to step 204 in fig. 2, step 304 in fig. 3 and step 402 in fig. 4. Based on a result of the comparing, the device 101 a discrepancy between the operating data and the modelling data and associated with the energy consumption. The discrepancy may be described as a difference, a deviation, etc.

Step 506

This step corresponds to step 205 in fig. 2, step 304 in fig. 3 and step 402 in fig. 4. The device 101 evaluates the detected discrepancy associated with the energy consumption.

The evaluation may comprise one or more of:

- evaluating energy consumption of the vehicle 100 in operation;
- detecting malfunction of the vehicle 100 in operation;
- determining a reason for the discrepancy;
- determining a vehicle configuration change; and
- determining a vehicle operation change.

Step 506 may comprise that the device 101 determines a user anticipation score for a user of the vehicle 100 in operation. Tthe user anticipation score may be as follows:

user anticipation score ~

$$f\left(\frac{w\_overall}{W^{\delta}*B^{\varepsilon}*S^{\zeta}}\right)$$

, where

- W: weight impact ~ $\alpha * w_{light} + \beta * w_{medium} + Y * w_{full}$
- B: brake impact ~

$$\max\left(\frac{brakes - stops}{stops}, \ brake\_max\right)$$

- S: speed impact ~ $\frac{v-v_{min}}{v_{max}-v_{min}}$
- $\alpha, \beta, y, \delta, \varepsilon, \zeta, w_{overall}, brake\_max$: real value scalar parameters
- $w\_overall$: overall weight
- $brake\_max$: max limit for a brake impact
- $f$: a normalized sigmoid function that maps any real value to a value between 0 and 1
- $w_{light}, w_{medium}, w_{full}$: a ratio of km driven with light, medium and full weight load respectively
- $v$: an average speed and speeds outside $v_{min}$ or $v_{max}$ will be clipped to those values.

Step 506 may comprise that the device 101 determines a user eco score for a user of the vehicle 100 in operation. The user eco score may be as follows:

eco score ~ $f\left(\frac{w_{overall}*W^{\eta}}{O^{\theta}*N^{\kappa}*S^{\mu}}\right)$ , where

- W: weight impact ~ $\alpha * w_{light} + \beta * w_{medium} + \gamma * w_{full}$
- O: overload impact ~ $\frac{1}{\varphi} * \frac{t\_overload}{t\_total}$
- N: not in green zone impact ~ $\frac{1}{\xi}*(\max(\min\left(\frac{l_{notgreen} - l_{avg}}{l_{avg}}, 0\right),1))$
- S: speed impact ~ $\frac{v-v_{min}}{v_{max}-v_{min}}$
- $\eta, \theta, \kappa, \mu, \varphi$: real value scalar parameters
- $w_{overall}$: an overall weight
- $\varphi, \xi$: normalization factors
- $f$: a normalized sigmoid function that maps any real value to a value between 0 and 1
- $w_{light}, w_{medium}, w_{full}$: a ratio of km driven with light, medium and full weight load respectively
- $\frac{t\_overload}{t\_total}$ : a ratio of time spent in overload
- $l\_notgreen$: liters per 100 km spent above the green zone
- $l_{avg}$: liters per 100 km
- $v$: an average speed and speeds outside $v_{min}$ or $v_{max}$

will be clipped to those values.

Step 507

This step corresponds to step 205 in fig. 2, step 304 in fig. 3 and step 403 in fig. 4. The device 101 triggers an operation when the discrepancy has been detected.

The operation may comprise one or more of:

- providing information associated with the discrepancy;
- triggering an alert;
- initiating scheduling of a service operation; and
- requesting input from a user of the vehicle 100 in operation.

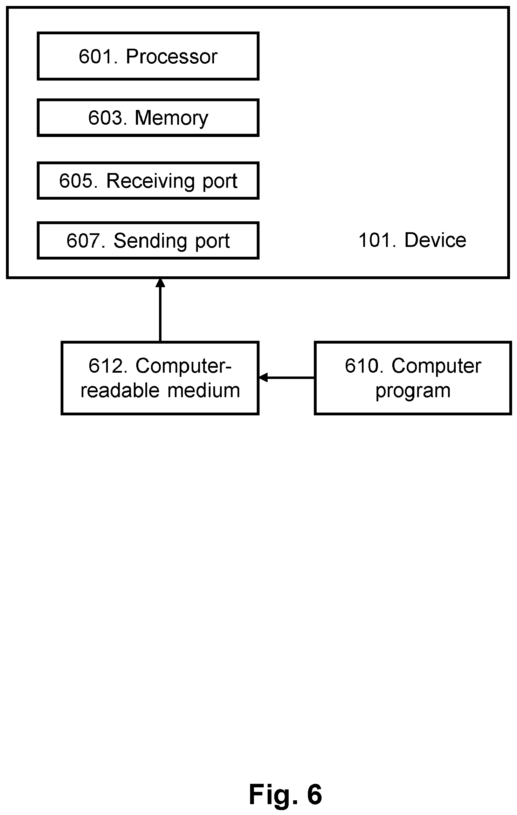

The device 101 for handling a data associated with energy consumption of vehicles 100 is configured to perform the steps of the method according to at least one of figs. 2, 3, 4 and 5. To perform at least one of the method steps shown in at least one of figs. 2, 3, 4 and 5, the device 101 may comprise an arrangement as shown in fig. 6.

The present invention related to the device 101 for may be implemented through one or more processors, such as a processor 601 in the device 101 for depicted in fig. 6, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the device 101. One such carrier may be in the form of a CD ROM disc. It is however feasible with other data carriers such as a memory stick. The computer program code may be provided as pure program code on a server and downloaded to the device 101.

The device 101 may comprise a **memory 603** comprising one or more memory units. The memory 603 is arranged to be used to store obtained data, modelling data, operating data, statistics, data, configurations, schedulings, and applications etc. to perform the methods herein when being executed in the device 101.

The device 101 may receive data and information from, e.g. the vehicle 100, vehicle fleet, , through a **receiving port 605.** The receiving port 605 may be, for example, connected to one or more antennas in device 101. The device 101 may receive data from for example the vehicle 100 in operation, the vehicle fleet etc. Since the receiving port 601 may be in communication with the processor 601, the receiving port 605 may then send the received data to the processor 601. The receiving port 605 may also be configured to receive other data.

The processor 601 in the device 101 may be configured to transmit or send data to e.g. the vehicle 100, vehicle fleet, display or another structure, through a **sending port 607,** which may be in communication with the processor 601, and the memory 603.

Thus, the methods described herein for the device 101 may be respectively implemented by means of a **computer program 610,** comprising instructions, i.e., software code portions, which, when executed on at least one processor 601, cause the at least one processor 601 to carry out the actions described herein, as performed by the device 101. The computer program 610 product may be stored on a **computer-readable medium 612**. The computer-readable medium 612, having stored thereon the computer program 610, may comprise instructions which, when executed on at least one processor 601, cause the at least one processor 601 to carry out the actions described herein, as performed by the device 101. The computer-readable medium 612 may be a non-transitory computer-readable storage medium, such as a CD ROM disc, or a memory stick. The computer program 610 product may be stored on a carrier containing the computer program 610 just described, wherein the carrier is one of an electronic signal, optical signal, radio signal, or the computer-readable medium 612, as described above.

The vehicle 100 may comprise the device 101.

A computer program may comprise program code means for performing the steps of at least one of the methods in figs. 2, 3, 4 and 5 when the computer program is run on a computer.

A computer readable medium may carry a computer program comprising program code means for performing the steps of any of the steps of at least one of the methods in figs. 2, 3, 4 and 5 when the computer program is run on a computer.

As described earlier, the modelling data are generated by a digital model of the vehicle 100 in operation. The digital model may be a digital twin. The digital model may be referred to as an energy digital twin. The digital model may be a model built on real life data coming from vehicles in a vehicle fleet. An example of the digital model is illustrated in **fig. 7.** The digital model may comprise one or more of the following building blocks:

- Standard related configuration
- Ideal driving
- Ideal vehicle configuration

The building blocks may be described as a sub-model of the digital model, a function comprised in the digital model, a process comprised in the digital model etc. Even though fig. 7 illustrates three separate building blocks, this may be only an example. The digital model may be one model adapted to perform the functions of each building block.

With the standard related configuration building block, the digital model may identify an anomaly linked to the vehicles and the associated equipment. The standard related configuration maybe associated with any suitable vehicle standard, e.g. ISO. With the standard related configuration, the device 101 may be able to detects discrepancies due to the equipment and identify a potential root cause.

With the ideal driving building block, the device 101 may be able to evaluate the potential of energy consumption reduction if the vehicle was driven ideally. With the ideal driving building block, the device 101 may be able to detect of improvements potentially linked to driving behaviour, e.g. anticipation, eco-zone etc. and propose an action plan. In other words, the operating data obtained from the vehicle 100 in operation may be compared to ideal driving of the vehicle. This may show a potential for improvement to motivate user of the vehicle and other vehicle related persons to focus on fuel consumption. Therefore, the device 101 may estimate the fuel consumption achievable for a given vehicle and mission, given an excellent user, e.g. an ideal user. The following operating data may be excluded from the use of the device 101 :

• total hours are less than 5 or more than 24*7 hours
• total km are less than 100
• liters per 100 km are less than 20 and more than 66

The device 101 may quantify how to measure the user's performance and based on that assign a score to each vehicle. For example, a score between 0 and 1, with 1 indicating may an excellent user performance. Weekly operating data with the top driver performance, ex. top 10% of the population, may be selected by the device 101. An ideal driver model may be trained, e.g. using supervised modelling approach. Input to the ideal driver model may be non-driver related features, e.g. vehicle specifications, transport mission. Output of the ideal driver model may be fuel consumption, e.g. liters per 100 km. The device 101 may predict the fuel consumption for all vehicles and compare the predicted ideal fuel consumption with the actual value of the vehicle 101 in operation. The device 101 may make recommendations on what the user can improve in order to reach the ideal fuel consumption.

With the ideal vehicle configuration building block, the device 101 may be able to evaluate the potential of energy consumption reduction if the vehicle was driven ideally. With the ideal vehicle configuration building block, the device 101 may be able to indicate the right configuration based on vehicle mission. The device 101 may be adapted to provide energy service planning and root cause analysis. With the ideal vehicle configuration building block, the device 101 may be able to detect improvements linked to the vehicle configuration, for example axle ratio etc.

As mentioned in step 502 earlier, the device 101 may obtain a statistical distribution of the modelling data. **Fig. 8** is a graph illustrating an example of such statistical distribution. The x-axis represents liters per driven 100 km. The top dotted line 801 represents the fuel consumption prediction quantlie 0.95, the middle dotted line 802 represents the fuel consumption prediction quantlie 0.5. The lower dotted line 803 represents the actual fuel consumption in liters per driven 100km.

The trust model described earlier will now be described in more detail. **Fig. 9** is a graph illustrating the discrepancy and the trust area.

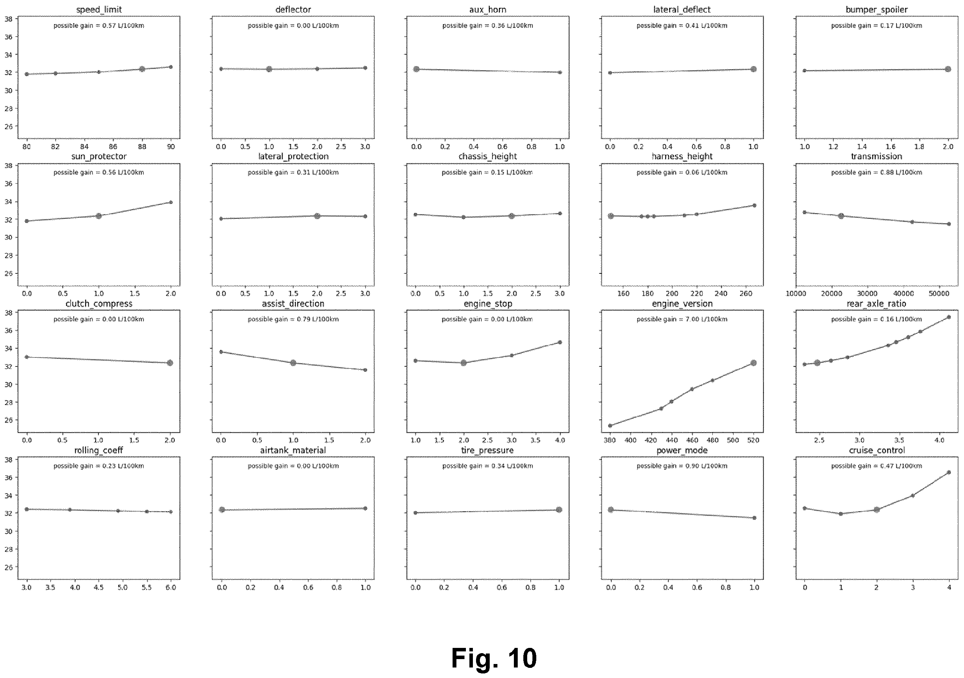

**Fig. 10** are graphs exemplifying parameters that may be used in the evaluation, for example a in a root cause investigation. The device 101 may evaluate if the variant is ok or if it is going the wrong way.

**Fig. 11a** illustrates the method for handling a data associated with energy consumption of a vehicle 100 in operation. Similar to step 300 in fig. 3, the dimension of the main fleet of vehicles is reduced, as seen in the top part of fig 11a. The middle part of fig. 11a illustrates that a clustering may be performed. The bottom part of fig. 11a illustrates cluster statistics and modelling. **Fig. 11b** illustrates a result of the method exemplified in fig. 11a. The graph in fig. 11b illustrates the top driver by 10th percentile of neighbours fuel consumption. From the graph, a current user score may be provided for example in the form of a score on a scale from 1-10. The user score is exemplified to be 5 in fig. 11b. From the user score, an action recommendation may be provided. At the end, a trust index may be provided. The user score is exemplified to be 9 in fig. 11b. The trust index, also described in fig. 3, may be for example on a scale ranging from high, medium to low. The trust index is exemplified to be high in fig. 11b.

The user anticipation score and the user eco score will now be described in more detail.

A top user may be selected based on the user anticipation score. A parameter set search may have been performed by the device 101 to make sure that the top user selection is representative of the complete population and is not biased by the vehicle's transport mission. Top users may be defined as users with anticipation score higher that 0.85 and less than 1, e.g. approximately 6% of the population. The device 101 may compare the characteristics of the top users to the remaining drivers in the population. Top users may have a good coverage of the different transport missions when looking at the average speed, weight and number of stops. Top users may have a significant lower average number of brakes per stop. Top users may consume less fuel and spent less time in overload than the remaining users.

A top user may be selected based on the user eco score. The device 101 may have

performed a parameter set search to make sure that the top user selection is representative of the complete population and is not biased by the vehicle's transport mission. Top users may be defined as users with score higher that 0.8, e.g. approximately 8.5% of the population. The device 101 may compare the characteristics of the top users to the remaining users in the population. Top users may have a good coverage of the different transport missions when looking at the average speed , weight and number of stops. Top users may have spent less fuel in engine above the green zone than the remaining users. Top users may consume less fuel in general and spent less time in overload than the remaining users.

Summarized, the present invention relates to reducing the time required to detect an energy anomaly crossing mission, user behavior and truck configuration data. It enables root cause analysis and associated improvements. The present invention enables improving user scoring and following action plan implementation to identify validity of the alert.

With the present invention, vehicle fuel monitoring may be provided. In case of deviation, a user of the vehicle or any other suitable person may be alerted and an improvement action plan may be provided. This may make the life of vehicle fleet manager easier.

In general, the usage of "first", "second", "third", "fourth", and/or "fifth" herein may be understood to be an arbitrary way to denote different elements or entities, and may be understood to not confer a cumulative or chronological character to the nouns they modify, unless otherwise noted, based on context.

The term "at least one of A and B" should be understood to mean "only A, only B, or both A and B.", where A and B are any parameter, number, indication used herein etc.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

It is to be understood that the present invention is not limited to the embodiments described above and illustrated in the drawings; rather, the skilled person will recognize that many changes and modifications may be made within the scope of the appended claims.

**Claims**

1. A method performed by a device (101) for handling data associated with energy consumption of a vehicle (100) in operation, the method comprising:

   *obtaining* (201, 301, 401, 501) modelling data associated with energy consumption of a model vehicle, wherein the modelling data are generated by a digital model of the vehicle (100) in operation;
   *obtaining* (202, 302, 401, 503) operating data associated with energy consumption of the vehicle (100) in operation;
   *comparing* (203, 303, 402, 504) the operating data to the modelling data;
   based on a result of the comparing, *detecting* (204, 304, 402, 505) a discrepancy between the operating data and the modelling data and associated with the energy consumption;
   *evaluating* (205, 304, 402, 506) the detected discrepancy associated with the energy consumption; and
   *triggering* (205, 304, 403, 507) an operation when the discrepancy has been detected.

2. The method according to claim 1, wherein the *evaluating* (205, 304, 402, 506) the detected discrepancy associated with the energy consumption comprises one or more of:

   *evaluating* energy consumption of the vehicle (100) in operation;
   *detecting* malfunction of the vehicle (100) in operation;
   *determining* a reason for the discrepancy;
   *determining* a vehicle configuration change; and
   *determining* a vehicle operation change.

3. The method according to either of the preceding claims, wherein the operation comprises one or more of:

   *providing* information associated with the discrepancy;
   *triggering* an alert;
   *initiating* scheduling of a service operation; and
   *requesting* input from a user of the vehicle (100) in operation.

4. The method according to any of the preceding claims, wherein the modelling data and the operating data are both based on static data and/or dynamic data.

5. The method according to any of the preceding claims, comprising:

   *obtaining* (402, 502) a statistical distribution of the modelling data; and
   wherein the *comparing* (203, 303, 402, 504) the operating data to the modelling data comprises:
   *comparing* operating data to the statistical distribution of the modelling data to determine if the operating data is according to the statistical distribution or not.

6. The method according to any of the preceding claims, wherein the *evaluating* (205, 304, 402, 506) the detected discrepancy associated with the energy consumption comprises:
   *determining* a user anticipation score for a user of the vehicle (100) in operation, wherein the user anticipation score is:
user anticipation score ~

$$f\left(\frac{w\_overall}{W^{\varepsilon}*B^{\delta}*S^{\zeta}}\right)$$

, where

• W: weight impact ~ $\alpha * w_{light} + \beta * W_{medium} + \gamma * W_{full}$

• B: brake impact ~

$$\max\left(\frac{brakes - stops}{stops}, \ brake\_max\right)$$

• S: speed impact ~ $\frac{v - v_{min}}{v_{max} - v_{min}}$

• $\alpha, \beta, \gamma, \delta, \varepsilon, \zeta, w_{overall}, brake\_max$: real value scalar parameters

• w_overall: overall weight

• brake_max: max limit for a brake impact

• f: a normalized sigmoid function that maps any real value to a value between 0 and 1

• $w_{light}, w_{medium}, w_{full}$: a ratio of km driven with light, medium and full weight load respectively

• v: an average speed and speeds outside $v_{min}$ or $v_{max}$ will be clipped to those values.

7. The method according to any of the preceding claims, wherein the *evaluating* (205, 304, 402) the detected discrepancy associated with the energy consumption comprises:
   *determining* a user eco score for a user of the vehicle (100) in operation, wherein the user eco score is:

eco score ~ $f\left(\frac{W_{overall}*W^{\eta}}{O^{\theta}*N^{\kappa}*S^{\mu}}\right)$ , where

• W: weight impact ~ $\alpha * w_{light} + \beta * w_{medium} + \gamma * w_{full}$

• O: overload impact ~ $\frac{1}{\varphi} * \frac{t\_overload}{t\_total}$

• N: not in green zone impact ~
$\frac{1}{\xi} * (\max(\min\left(\frac{l_{notgreen} - l_{avg}}{l_{avg}}, \ 0\right), 1))$

• S: speed impact ~ $\frac{v - v_{min}}{v_{max} - v_{min}}$

• $\eta, \theta, \kappa, \mu, \varphi$: real value scalar parameters

• $w_{overall}$: an overall weight

• $\varphi, \xi$: normalization factors

• f: a normalized sigmoid function that maps any real value to a value between 0 and 1

• $w_{light}, w_{medium}, w_{full}$: a ratio of km driven with light, medium and full weight load respectively

• $\frac{t\_overload}{t\_total}$ : a ratio of time spent in overload

• l_notgreen: liters per 100 km spent above the green zone

• $l_{avg}$: liters per 100 km

• v: an average speed and speeds outside $v_{min}$ or $v_{max}$ will be clipped to those values.

8. The method according to any of the preceding claims, wherein the digital model is implemented on a remote server or in the vehicle (100).

9. The method according to any of the preceding claims, wherein the digital model is configured based on historic operating data obtained from a fleet of vehicles.

10. The method according to claim 9, wherein vehicles (100) comprised in the fleet of vehicles have similar mission and configuration.

11. The method according to any of claims 9-10, wherein the vehicles (100) comprised in the fleet of vehicles are selected (300) from a main fleet of vehicles comprising vehicles (100) having both similar and different mission and configuration.

12. A device (101) for handling a data associated with energy consumption of vehicles (100), the device (600) being configured to perform the steps of the method according to any of claims 1-11.

13. A vehicle (100) comprising a device (101) according to claim 12.

14. A computer program comprising program code means for performing the steps of any of claims 1-11 when the computer program is run on a computer.

15. A computer readable medium carrying a computer program comprising program code means for performing the steps of any of claims 1-11 when the computer program is run on a computer.

100

101

101

**Fig. 1**

Fig. 2

Main vehicle
fleet population
dataset

100

300. Find similar vehicles in
terms of *mission*,
*configuration*

100

301. Obtain modelling
data (predict fuel
consumption)

302.
Vehicle operating data

100

303. Compare data

Comparison with similar
vehicles and compute ideal
user fuel consumption +
user score calculations

304.
Detect discrepancy
Output: Ideal user fuel
consumption and action
recommendation + user score
and trust index (i.e. what to
work on in order to decrease
fuel consumption in order to
move towards an ideal user)

**Fig. 3**

**401. Data colletion and transformation**

Vehicle in operation

Operating data

| Static data | Dynamic data |

Digital twin

Modelling data

| Static data | Dynamic data |

402. Comparison and evaluation

**403. Alerts and reports**

# Digital twin versus actual
(fuel consumption - l/km)

Alerts & actions

⚠ Strong deviation compared to digital twin, investigation required

✓ In line with digital twin

⚠ Above digita twin for a long period, investigation required

✓ In line with digital twin

—— Actual   - - - - Digital twin

# Fig. 4

```
┌─────────────────────────────────────┐
│                                      │
│      501. Obtain modelling data      │
│                                      │
└─────────────────────────────────────┘
                      │
                      ├──────────────┐
                      │              ▼
                      │  ┌─ ─ ─ ─ ─ ─ ─ ─ ─ ─ ─ ─ ─ ─ ─ ─┐
                      │     502. Obtain statistical       
                      │    distribution of modelling data 
                      │  └─ ─ ─ ─ ─ ─ ─ ─ ─ ─ ─ ─ ─ ─ ─ ─┘
                      │              │
                      ▼              ▼
┌─────────────────────────────────────┐
│                                      │
│      503.Obtain operating data       │
│                                      │
└─────────────────────────────────────┘
                      │
                      ▼
┌─────────────────────────────────────┐
│                                      │
│      504.Compare operating data to   │
│             modelling data           │
│                                      │
└─────────────────────────────────────┘
                      │
                      ▼
┌─────────────────────────────────────┐
│                                      │
│      505. Detect a discrepancy       │
│                                      │
└─────────────────────────────────────┘
                      │
                      ▼
┌─────────────────────────────────────┐
│                                      │
│      506. Evaluate the discrepancy   │
│                                      │
└─────────────────────────────────────┘
                      │
                      ▼
┌─────────────────────────────────────┐
│                                      │
│      507. Trigger an operation       │
│                                      │
└─────────────────────────────────────┘
```

# Fig. 5

601. Processor

603. Memory

605. Receiving port

607. Sending port

101. Device

612. Computer-readable medium

610. Computer program

**Fig. 6**

Standard Related
Configuration

Ideal driving

Ideal vehicle configuration

700. Digital model

**Fig. 7**

**Fig. 8**

VF611A368JD015839

**Fig. 9**

**Fig. 10**

Dimensionality reduction

clustering

Cluster statistics + modelling

**Fig. 11a**

Top user by 10th
percentile of
neighbours fuel
consumption

Current driver score

Action
recommendation

Trust Index

"work on anticipation"

# Fig. 11b

Europäisches
Patentamt

European
Patent Office

Office européen
des brevets

# EUROPEAN SEARCH REPORT

Application Number

EP 21 21 0072

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 464 547 B2 (GM GLOBAL TECH OPERATIONS LLC [US]) 5 November 2019 (2019-11-05) | 1-4,8, 11-15 | INV. G05B23/02 |
| Y | * SUMMARY; column 6, lines 36-47; figures 1-4 * * column 8, lines 48-52 * * column 9, lines 10-27 * * column 7, lines 46-62 * ----- | 5-7,9,10 | |
| Y | KR 2021 0061669 A (KOREA HYDRO & NUCLEAR POWER CO [KR]; SMARTPRO CO LTD [KR]) 28 May 2021 (2021-05-28) * Digital twin based fault analysis using comparison of statistical distribution.; paragraph [0062] * ----- | 5 | |
| Y | CN 110 070 245 A (JIQI IOT TECH SHANGHAI CO LTD) 30 July 2019 (2019-07-30) * "Summary of the invention" * ----- | 6,7 | |
| Y | US 10 192 448 B2 (NEC EUROPE LTD [DE]; NEC CORP [JP]) 29 January 2019 (2019-01-29) * column 4, lines 24-30 * ----- | 9,10 | **TECHNICAL FIELDS SEARCHED (IPC)** G05B B60L |

The present search report has been drawn up for all claims

| Place of search | Date of completion of the search | Examiner |
|---|---|---|
| Munich | 6 May 2022 | Heiner, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 0072

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2022

| Patent document cited in search report | | Publication date | Patent family member(s) | Publication date |
|---|---|---|---|---|
| US 10464547 | B2 | 05-11-2019 | CN 109263640 A | 25-01-2019 |
| | | | DE 102018116826 A1 | 17-01-2019 |
| | | | US 2019016329 A1 | 17-01-2019 |
| KR 20210061669 | A | 28-05-2021 | NONE | |
| CN 110070245 | A | 30-07-2019 | NONE | |
| US 10192448 | B2 | 29-01-2019 | NONE | |

EPO FORM P0459

For more details about this annex : see Official Journal of the European Patent Office, No. 12/82